# EUROPÄISCHE PATENTANMELDUNG

(11) **EP 2 068 424 A2**
(43) Veröffentlichungstag der Anmeldung: **10.06.2009**
(21) Anmeldenummer: 08021029.7
(22) Anmeldetag: 04.12.2008
(51) Int. Cl.: H02J 13/00

(54) **Abschalteinrichtung**

(30) Priorität: 05.12.2007 DE 202007017086 U
(71) Anmelder: Conrad Electronic SE, 92240 Hirschau (DE)
(72) Erfinder: Greiner, Harald, 92660 Neustadt an der Waldnaab (DE)
(74) Vertreter: Förster, Susanne

(57) **Zusammenfassung**

Die Erfindung betrifft eine Abschalteinrichtung für mindestens ein elektrisches Gerät mit einem Netzstecker (5) zum Verbinden mit der Netzspannung, einer Steckdose (7), in die der Netzstecker (5) des Gerätes einsteckbar ist, mindestens einem Infrarotempfänger (9) und mindestens einer Schalteinheit zum Verbinden und Trennen der Steckdose (7) mit/von der Netzspannung sowie einem Mikroprozessor zum Auswerten, Speichern und Vergleichen von vom Infrarotempfänger (9) empfangenen Infrarotsignalen (15) sowie zur Betätigung der Schalteinheit, wobei die Infrarotsignale (15) mittels Betätigen einer Infrarot-Fernbedienung (2) aussendbar sind, wobei ein Potentiometer (10) vorgesehen ist, mit dem die Verbindungszeit der Steckdose (7) mit der Netzspannung (Einschaltdauer) einstellbar ist.

## Beschreibung

Die Erfindung betrifft eine Abschalteinrichtung für mindestens ein elektrisches Gerät mit einem Netzstecker zum Verbinden mit der Netzspannung sowie den weiteren Merkmalen des Oberbegriffs des Anspruchs 1.

Elektrische Geräte, wie z.B. TV-Geräte, Radiogeräte oder Stereoanlagen, haben im Stand-By-Modus einen erheblichen Leistungsbedarf und verbrauchen entsprechend viel Strom. Dazu sind Abschaltvorrichtungen bekannt, die die Elektrogeräte komplett abschalten und somit dem Energiesparen dienen. Ein komplettes Abschalten von Elektrogeräten bringt nicht nur finanzielle Vorteile, sondern schont auch die Umwelt und sorgt für einen ruhigeren und gesünderen Schlaf.

Aus der DE 197 36 993 A1 ist bereits eine Abschalteinrichtung für ein elektrisches Gerät mit einem Netzstecker zum Verbinden mit der Netzspannung bekannt. Die Abschalteinrichtung umfasst eine Steckdose, in die der Netzstecker des Gerätes einsteckbar ist, einen Infrarotempfänger und eine Schalteinheit zum Verbinden der Steckdose mit der Netzspannung und zum Trennen der Steckdose von der Netzspannung. Außerdem ist ein Mikroprozessor zum Auswerten und Speichern eines ersten vom Infrarotempfänger empfangenen Infrarotsignals in einem an sich bekannten Lernzyklus vorgesehen, welcher auch zum Vergleichen eines zweiten vom Infrarotempfänger empfangenen Infrarotsignals mit dem ersten gespeicherten Infrarotsignal dient. Die Schalteinheit ist bei Gleichheit des zweiten Infrarotsignals mit dem ersten Infrarotsignal vom Mikroprozessor öffen- bzw. schließbar. Das Elektrogerät schaltet demnach sofort komplett ab, sobald z.B. die "AUS"-Taste der Fernbedienung betätigt wird.

Die Aufgabe der vorliegenden Erfindung besteht darin, eine gattungsgemäße Abschalteinrichtung zur Verfügung zu stellen, mit welcher das elektrische Gerät erst nach einer bestimmten gewünschten Zeit vollständig abschaltet.

Diese Aufgabe wird durch die gesamte Lehre des Anspruchs 1 gelöst. Vorteilhafte Weiterbildungen der Erfindung ergeben sich aus den Unteransprüchen 2-7.

Erfindungsgemäß ist ein Potentiometer vorgesehen, mit dem die Verbindungszeit der Steckdose mit der Netzspannung (Einschaltdauer) z.B. mittels eines Drehreglers einstellbar ist. Die Einschaltdauer kann z.B. auf eine Zeitdauer von 1 Minute bis zu 4 Stunden eingestellt werden. Diese Einstellbarkeit der Einschaltdauer hat den Vorteil, dass das elektrische Gerät auch dann vollständig abgeschaltet wird, wenn das Abschalten vom Benutzer vergessen wird. Dies ist z.B. oft der Fall, wenn der Benutzer beim Fernsehschauen, Musik hören oder dgl. einschläft. Der Benutzer muss dann das Fernsehgerät oder die Stereoanlage nicht mehr durch Betätigen der Fernbedienung oder eines Tasters am Gerät selbst abschalten.

Mit Vorteil kann auch eine unbegrenzte Einschaltdauer einstellbar sein. Dazu kann z.B. über eine bestimmte Position (z.B. rechte Endposition) des Drehreglers sich die Steckdose in einen dauerhaften Ein-Zustand versetzen lassen. Dies ist von Vorteil, wenn der Benutzer im Voraus nicht genau festlegen möchte, dass das Gerät nach einer bestimmten Zeit automatisch abschaltet. Mittels Betätigen einer bestimmten Taste der Infrarot-Fernbedienung kann die Steckdose auch vor Ablauf der eingestellten Zeit abgeschaltet werden, was auch im dauerhaften Einschaltbetrieb möglich ist. Dazu kann eine bestimmte Taste der Fernbedienung auf genau diese Funktion eingelernt, d.h. eingestellt werden. Ein solcher Lernmodus wird weiter unten in der Beschreibung näher erläutert.

Die Zeiteinstellung mittels des Potentiometers wird dabei permanent überprüft.

Vorteilhafterweise kann die Einschaltdauer stufenlos einstellbar sein und ist somit nach dem jeweiligen individuellen Bedarf optimal wählbar.

Mittels Betätigen einer beliebigen Taste (mit Ausnahme der Taste, die für das Ausschalten programmiert wurde) der Infrarot-Fernbedienung kann die Einschaltdauer auf den eingestellten Wert des Drehreglers zurückgesetzt werden. Dies ist nur möglich im retriggerbaren Modus. Eine Änderung wird als solche erfasst, wenn der ADC-Wert sich um mehr als fünf Digits ändert. Dies ist dann von Vorteil, wenn die Einschaltdauer bei Bedarf noch verlängert werden soll, ohne den Drehregler, der sich z.B. am Gehäuse des Infrarot-Empfängers befindet, zu betätigen. Mittels dieser Funktion kann der Benutzer auch jeden Abend genau dieselbe Einschaltdauer auswählen, indem er lediglich durch Betätigung einer bestimmten Taste der Infrarot-Fernbedienung den eingestellten Wert des Drehreglers zurücksetzt.

Auch kann das Gerät mittels Halten einer bestimmten Taste (z.B. Lerntaste) über eine bestimmte Zeit (z.B. länger als 5 Sekunden) zwischen nicht retriggerbar und retriggerbar umgeschalten werden. Befindet sich das Gerät im nicht retriggerbaren Modus und wird z.B. mittels Betätigen der Fernbedienung die Lautstärke geregelt oder das Fernsehprogramm gewechselt, dann läuft die ursprünglich eingestellte Einschaltzeit weiter.

Zweckmäßigerweise ist eine Kontrollleuchte, insbesondere eine LED, vorgesehen, die eine bestimmte Zeit vor dem Ablauf der Einschaltdauer aufleuchtet. Die Kontrollleuchte kann z.B. am Gehäuse des Infrarotempfängers angeordnet sein.

Diese Funktion kann so eingestellt sein, dass die Kontrollleuchte z.B. eine Minute vor Ablauf der Einschaltdauer blinkt und das Trennen der Steckdose von der Netzspannung ankündigt. Der Benutzer wird dadurch nicht vom plötzlichen Abschalten des Elektrogerätes überrascht, sondern hat noch die Möglichkeit, falls er dies wünscht, die Einschaltdauer zu verlängern.

Mit Vorteil können mehrere Schalteinheiten vorgesehen sein, die parallel betreibbar sind. Die Schalteinheiten können lernfähig sein, so dass jeder Schalteinheit ein Infrarotcode für das Einschalten und ein anderer Infrarotcode für das Ausschalten zugeordnet wird. So ist es möglich, dass z.B. Fernsehgerät, Stereoanlage, DVD-Player mit unterschiedlichen Fernbedienungstasten unabhängig voneinander bedient werden können. Es kann auch vorgesehen sein, dass über eine bestimmte Fernbedienungstaste alle Geräte auf einmal ausgeschaltet werden, wenn für jedes Gerät der gleiche Ausschaltcode verwendet wird.

Ferner kann eine Lerntaste vorgesehen sein, bei deren Betätigung eine bestimmte Taste der Fernbedienung als Einshalt- bzw. Ausschaltcode einer bestimmten Schalteinheit zugeordnet wird. Durch längeres Betätigen der Lerntaste kann der Retriggermodus ein- oder ausgeschaltet werden, d.h. im Retrigger-Modus wird bei einer weiteren Betätigung einer Taste die Zeit auf den vorgewählten Wert wieder zurückgesetzt. Ist der Modus ausgeschaltet, läuft auch bei erneuter Betätigung die vorgewählte Zeit weiter ab. Die Lerntaste kann an dem Gehäuse vorgesehen sein, an welchem sich auch die Steckdose befindet. Mittels der Lerntaste ist die Abschalteinrichtung in einfacher Weise programmierbar.

Am Gehäuse des Infrarotempfängers kann eine Leuchte, insbesondere eine LED, vorgesehen sein, die anzeigt, ob sich das System im Lernmodus befindet. Damit ist eine einfache Kontrollmöglichkeit zur Verfügung gestellt, um überprüfen zu können, ob bei Betätigung der Fernbedienung sich das System im Lernmodus befindet. Dazu kann die LED z.B. aufblinken oder kontinuierlich leuchten.

Der Lernmodus kann z.B. derart ablaufen, dass, falls die Lerntaste betätigt wird, die Leuchte bzw. die LED am Gehäuse des Infrarot-Empfängers aufleuchtet und ein Code für das Einschalten der Steckdose erwartet wird. Nach Empfang eines korrekten Infrarotcodes erscheint eine Quittierung (z.B. 3 x Blinken) über die Leuchte. Anschließend beginnt die Leuchte zu blinken und es wird ein Code zum Ausschalten der Steckdose erwartet. Nach Empfang eines weiteren korrekten Infrarotcodes erscheint erneut eine Quittierung (z.B. 5 x Blinken) über die Leuchte. Wird als Einschalt- und Ausschaltcode die gleiche Fernbedienungstaste gedrückt, wird erneut nach einem Ausschaltcode gefragt und dies wird durch erneutes Blinken der Leuchte signalisiert. Wird ein Code erkannt, blinkt die Leuchte kurz auf. Sind auf diese Weise sowohl Ein- und Auscode eingelernt, erlischt die Leuchte am Gehäuse des Infrarotempfängers kurz, und beginnt anschließend wieder zu leuchten. Jetzt kann die Lerntaste für mehr als 3 Sekunden betätigt werden, um den Retriggermodus auszuschalten. Wird innerhalb von 10 Sekunden die Lerntaste nicht betätigt, bleibt der Retriggermodus eingeschaltet. Anschließend erlischt die Leuchte und der Einlernvorgang ist abgeschlossen. Die Steckdose kann durch das Betätigen der Eintaste auf der Infrarot-Fernbedienung eingeschaltet werden. Die Verlustleistung des Systems beträgt weniger als 1 Watt.

Die Erfindung ist anhand eines vorteilhaften Ausführungsbeispiels in der Zeichnungsfigur näher erläutert. Diese zeigt:

Eine prinzipielle Darstellung der Abschalteinrichtung mit mehreren Schalteinheiten.

Bezugsziffer 1 bezeichnet die Abschalteinrichtung in ihrer Gesamtheit. Zusätzlich zur Abschalteinrichtung 1 ist in der Zeichnungsfigur auch noch eine Infrarot-Fernbedienung 2 dargestellt. Die Abschalteinrichtung 1 ist für mehrere elektrische Geräte vorgesehen, von denen in den Zeichnungsfiguren eine TV-Gerät 3 sowie eine Stereoanlage 4 eingezeichnet sind. Das jeweilige elektrische Gerät weist einen Netzstecker 5 zum Verbinden mit der Netzspannung auf. In einem ersten Gehäuse 6 ist eine Steckdose 7 angeordnet, in die der Netzstecker 5 des elektrischen Gerätes einsteckbar ist. Das erste Gehäuse 6 weist jeweils ebenfalls einen Netzstecker 14 zum Einstecken in eine Netzsteckdose auf. In einem zweiten Gehäuse 8 ist ein Infrarotempfänger 9 vorgesehen. In dem jeweiligen ersten Gehäuse 6 ist jeweils eine Schalteinheit zum Verbinden und Trennen der Steckdose 7 mit/von der Netzspannung sowie ein Mikroprozessor untergebracht. Der Mikroprozessor dient dem Auswerten, Speichern und Vergleichen von vom Infrarotempfänger 9 empfangenen Infrarotsignalen 15 sowie zur Betätigung der Schalteinheit. Die Infrarotsignale 15 sind mittels Betätigen der Infrarot-Fernbedienung 2 aussendbar. Im zweiten Gehäuse 8 ist ferner ein Potentiometer vorgesehen, welches mittels eines Drehreglers 10 betätigbar ist und mit dem die Verbindungszeit der Steckdose 7 mit der Netzspannung und demnach die Einschaltdauer einstellbar ist. Die Abschalteinrichtung ist damit mit einer sogenannten Sleep-Funktion ausgestattet. Diese hat aber zusätzlich den Vorteil, dass das elektrische Gerät nach der vorgewählten Einschaltdauer automatisch und vollständig (also nicht nur in den Stand-By-Modus) abschaltet.

Es ist aber auch eine unbegrenzte Einschaltdauer einstellbar, in dem der Drehregler 10 in eine bestimmte Position, z.B. in die rechte Endposition, gedreht wird.

Die Einschaltdauer ist stufenlos, z.B. von 1 Minute bis zu 4 Stunden, einstellbar, so dass die Abschalteinrichtung individuell nach Wunsch nach einer beliebigen Zeit vollständig die Steckdose 7 von der Netzspannung trennt.

Durch erneutes Betätigen einer beliebigen Taste 12 der Infrarot-Fernbedienung 2 ist die Einschaltdauer auf den eingestellten Wert des Drehreglers 10 zurücksetzbar. Sollte also z.B. der Benutzer den Drehregler 10 auf 30 Minuten eingestellt haben, was der Zeit entspricht, in der er üblicherweise einschläft, nach Ablauf von einigen Minuten aber nochmals eine Taste 12 der Fernbedienung 2 drückt, dann wird die Einschaltdauer nochmals auf 30 Minuten zurückgesetzt, wenn der Retriggermodus eingeschaltet ist.

Am zweiten Gehäuse 8 des Infrarotempfängers 9 ist eine Kontrollleuchte, nämlich eine Kontroll-LED 11 vorgesehen, die eine bestimmte Zeit vor Ablauf der Einschaltdauer aufleuchtet bzw. aufblinkt und damit das Abschalten der Steckdose 7 ankündigt. Ein plötzliches und überraschendes Abschalten des elektrischen Gerätes wird dadurch verhindert. Bei Bedarf kann die Einschaltdauer nochmals durch Betätigen einer beliebigen Taste der Infrarot-Fernbedienung 2 zurückgesetzt werden, so dass das elektrische Gerät weiter mit Strom versorgt wird.

Wie aus der Zeichnungsfigur hervorgeht, sind zwei Gehäuse 6 mit darin angeordneten Schalteinheiten vorgesehen. Die jeweiligen Schalteinheiten sind jeweils zusammen mit den Infrarotempfängern 9, die jeweils in den zweiten Gehäusen 8 untergebracht sind, parallel betreibbar. Dazu wird der jeweiligen Schalteinheit eine bestimmte Taste 12 auf der Infrarot-Fernbedienung 2 zugeordnet, mit welchem das jeweilige elektrische Gerät komplett abgeschaltet werden kann.

An dem ersten Gehäuse 6 ist jeweils eine Lerntaste 13 vorgesehen, bei deren Betätigung eine bestimmte Taste 12 der Fernbedienung einer bestimmten Schalteinheit zugeordnet wird. Das System befindet sich dann im Lernmodus. Befindet sich das System im Lernmodus, wird dies durch das Aufblinken oder Leuchten der Kontroll-LED 11 signalisiert.

### BEZUGSZEICHENLISTE

- 1): Abschalteinrichtung
- 2): Infrarot-Fernbedienung
- 3): TV-Gerät
- 4): Stereoanlage
- 5): Netzstecker
- 6): erstes Gehäuse
- 7): Steckdose
- 8): zweites Gehäuse
- 9): Infrarot-Empfänger
- 10): Drehregler
- 11): Kontroll-LED
- 12): Taste
- 13): Lerntaste
- 14): Netzstecker
- 15): Infrarotsignal

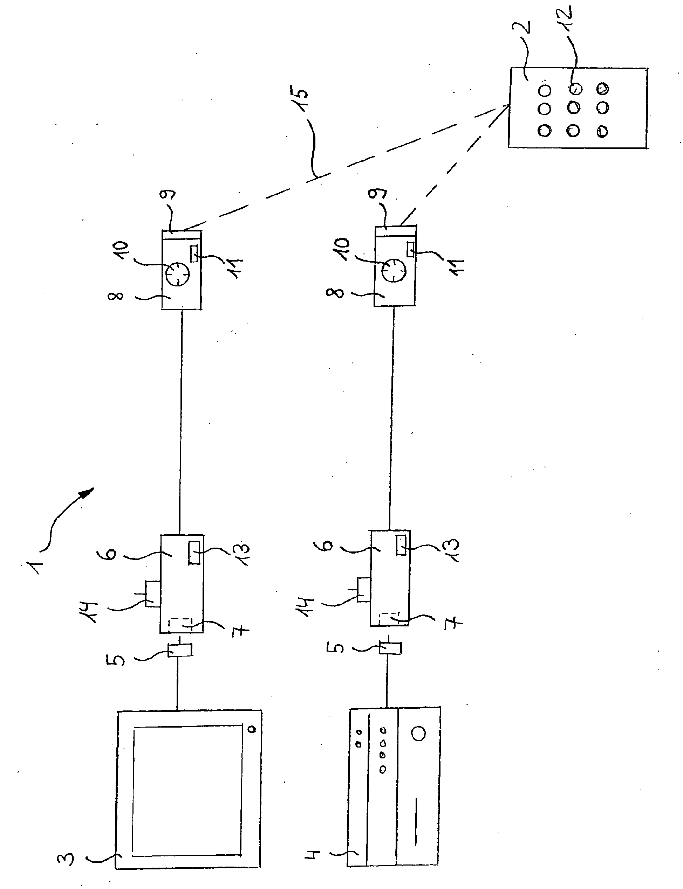

## Patentansprüche

1. Abschalteinrichtung für mindestens ein elektrisches Gerät mit einem Netzstecker (5) zum Verbinden mit der Netzspannung, einer Steckdose (7), in die der Netzstecker (5) des Gerätes einsteckbar ist, mindestens einem Infrarotempfänger (9) und mindestens einer Schalteinheit zum Verbinden und Trennen der Steckdose (7) mit/von der Netzspannung sowie einem Mikroprozessor zum Auswerten, Speichern und Vergleichen von vom Infrarotempfänger (9) empfangenen Infrarotsignalen (15) sowie zur Betätigung der Schalteinheit, wobei die Infrarotsignale (15) mittels Betätigen einer Infrarot-Fernbedienung (2) aussendbar sind,
**dadurch gekennzeichnet, dass**
ein Potentiometer (10) vorgesehen ist, mit dem die Verbindungszeit der Steckdose (7) mit der Netzspannung (Einschaltdauer) einstellbar ist.

2. Abschalteinrichtung nach Anspruch 1,
**dadurch gekennzeichnet, dass**
eine unbegrenzte Einschaltdauer einstellbar ist.

3. Abschalteinrichtung nach einem der Ansprüche 1 oder 2,
**dadurch gekennzeichnet, dass**
die Einschaltdauer stufenlos einstellbar ist.

4. Abschalteinrichtung nach einem der vorhergehenden Ansprüche,
**dadurch gekennzeichnet, dass**
die Einschaltdauer mittels eines Drehreglers (10) einstellbar ist.

5. Abschalteinrichtung nach einem der vorhergehenden Ansprüche,
**dadurch gekennzeichnet, dass**
mittels Betätigen einer Taste der Infrarot-Fernbedienung (2) die Einschaltdauer auf den eingestellten Wert des Drehreglers (10) zurücksetzbar ist.

6. Abschalteinrichtung nach einem der vorhergehenden Ansprüche,
**dadurch gekennzeichnet, dass**
eine Kontrollleuchte (11), insbesondere eine LED, vorgesehen ist, die eine bestimmte Zeit vor Ablauf der Einschaltdauer aufleuchtet oder blinkt.

7. Abschalteinrichtung nach einem der vorhergehenden Ansprüche,
**dadurch gekennzeichnet, dass**
mehrere Schalteinheiten parallel betreibbar sind.

8. Abschalteinrichtung nach einem der vorhergehenden Ansprüche,
**dadurch gekennzeichnet, dass**
eine Lerntaste (13) vorgesehen ist, bei deren Betätigung eine bestimmte Taste (12) der Fernbedienung als Einschalt- bzw. Ausschaltcode einer bestimmten Schalteinheit zugeordnet wird.

9. Abschalteinrichtung (1) nach einem der vorhergehenden Ansprüche,
**dadurch gekennzeichnet, dass**
eine Leuchte (11), insbesondere eine LED, zur Anzeige des Lernmodus vorgesehen ist.
